# EUROPEAN PATENT APPLICATION

(11) **EP 4 773 629 A1**
(43) Date of publication of application: **08.07.2026**
(21) Application number: 24877551.2
(22) Date of filing: 11.10.2024
(51) Int. Cl.: H04R 3/12, H04R 5/02, H04S 3/00, H04R 5/04

(54) **ELECTRONIC DEVICE AND METHOD FOR OUTPUTTING AUDIO DATA FROM ELECTRONIC DEVICE**

(30) Priority: 11.10.2023 KR 20230135010; 08.11.2023 KR 20230153404
(71) Applicant: Samsung Electronics Co., Ltd., Suwon-si, Gyeonggi-do 16677 (KR)
(72) Inventor: KIM, Kyumin, Suwon-si Gyeonggi-do 16677 (KR); KIM, Misun, Suwon-si Gyeonggi-do 16677 (KR); SEO, Mira, Suwon-si Gyeonggi-do 16677 (KR); SON, Beakkwon, Suwon-si Gyeonggi-do 16677 (KR); UM, Hyunjin, Suwon-si Gyeonggi-do 16677 (KR); OK, Dongmoon, Suwon-si Gyeonggi-do 16677 (KR)
(74) Representative: Nederlandsch Octrooibureau
(86) International application number: PCT/KR2024/015396
(87) International publication number: WO 2025/080016

(57) **Abstract**

An electronic device according to various embodiments of the present disclosure may store instructions configured to: acquire audio data including first channel audio data and second channel audio data on the basis of an audio output event; operate to calculate a first value corresponding to the first channel audio data and a second value corresponding to the second channel audio data when an output channel for outputting the audio data is a mono channel; operate to calculate a third value corresponding to first mixed audio data obtained by mixing the first channel audio data and the second channel audio data when the first value or the second value satisfies a first specified condition; and invert the phase of the first channel audio data when the third value satisfies a second specified condition, and output, via an acoustic output module, second mixed audio data obtained by mixing the phase-inverted first channel audio data and the second audio data or transmit the second mixed audio data to an external acoustic output device via a communication module. Various other embodiments may be possible.

## Description

### [Technical Field]

Various embodiments of the disclosure relate to a method for outputting audio data in an electronic device.

### [Background Art]

As electronic information communication technology has advanced, various functions have been integrated into communication devices or electronic devices, and an electronic device may be implemented to perform an interworking function that interworks with another electronic device through communication. An electronic device (e.g., a mobile terminal, a tablet terminal, or a wearable electronic device) includes a communication function as well as an audio data (or sound source) playback function, and may play back not only audio data stored at the time of manufacture but also audio data of media streamed in real-time through a network. For example, the electronic device may perform the audio data playback function through an audio output module (e.g., a speaker) included in the electronic device or may perform the audio data playback function in conjunction with an external audio output device (e.g., a wired earphone, a wireless earphone, a wireless headset, or a wired headset) through wired or wireless communication.

The above-described information may be provided as related art for the purpose of helping understanding of the disclosure. Nothing in the above-described content may be claimed as prior art related to this document or used to determine prior art.

### [Detailed Description of the Invention]

### [Technical Problem]

Audio data played back in an electronic device may include data obtained by digitizing an audio signal corresponding to one or more channels. A channel may indicate the number of independent audio signals that are simultaneously recorded or played back. Audio data including an audio signal of one channel may be mono audio data (or one-channel audio data), and audio data including audio signals of two channels may be stereo audio data (or two-channel audio data).

When playing back two-channel audio data including audio signals of two channels (e.g., a left channel and a right channel), the electronic device may output the two-channel audio data through an audio output module (or an external audio output device) having one or more output channels.

When the electronic device outputs two-channel audio data through an internal audio output module having one output channel, the electronic device may mix first channel audio data of the two-channel audio data and second channel audio data of the two-channel audio data, and may cause the mixed audio data to be output through the audio output module having one output channel.

When the electronic device outputs two-channel audio data through an external audio output device having one output channel, the electronic device may mix first channel audio data of the two-channel audio data and second channel audio data of the two-channel audio data, and may transmit the mixed audio data to the external audio output device to be output, or may transmit the two-channel audio data to the external audio output device and then cause the two-channel audio data to be mixed and output in the external audio output device. When two-channel data includes first channel data and second channel data that are only opposite in phase to each other, if the first channel data and the second channel data are mixed, the first channel data and the second channel data cancel each other out, and the value of the mixed audio data may become substantially zero. When the value of the mixed audio data is zero, a silence phenomenon in which no sound is produced may occur from the audio output module (or the external audio output device) receiving and outputting the mixed audio data.

### [Technical Solution]

According to an embodiment of the disclosure, it is possible to provide an electronic device and a method of outputting audio data in the electronic device capable of preventing a silence phenomenon from occurring when outputting first channel data and second channel data that are only opposite in phase to each other through an audio output module (or an external audio output device) having one output channel.

An electronic device according to an embodiment of the disclosure may include an audio output module, a communication module, memory, and at least one processor. The memory may store instructions configured to, when executed by the at least one processor, cause the electronic device to obtain audio data including first channel audio data and second channel audio data based on an audio output event. The memory may store instructions configured to, when executed by the at least one processor, cause the electronic device to calculate a first value corresponding to the first channel audio data and a second value corresponding to the second channel audio data when an output channel for outputting the audio data is a mono channel. The memory may store instructions configured to, when executed by the at least one processor, cause the electronic device to calculate a third value corresponding to first mixed audio data obtained by mixing the first channel audio data and the second channel audio data when the first value or the second value is greater than or equal to a first specified value. The memory may store instructions configured to, when executed by the at least one processor, cause the electronic device to output the first mixed audio data through the audio output module or transmit the first mixed audio data to an external audio output device through the communication module when the third value satisfies a first specified condition. The memory may store instructions configured to, when executed by the at least one processor, cause the electronic device to invert a phase of the first channel audio data and output second mixed audio data obtained by mixing the phase-inverted first channel audio data and the second channel audio data, through the audio output module or transmit the second mixed audio data to an external audio output device through the communication module when the third value satisfies a second specified condition.

A method of outputting audio data in an electronic device according to an embodiment of the disclosure may include an operation of obtaining the audio data including first channel audio data and second channel audio data based on an audio output event. The method according to an embodiment may include an operation of calculating a first value corresponding to the first channel audio data and a second value corresponding to the second channel audio data when an output channel for outputting the audio data is a mono channel. The method according to an embodiment may include an operation of calculating a third value corresponding to first mixed audio data obtained by mixing the first channel audio data and the second channel audio data when the first value or the second value is greater than or equal to a first specified value. The method according to an embodiment may include an operation of outputting the first mixed audio data through an audio output module or transmitting the first mixed audio data to an external audio output device through a communication module when the third value satisfies a first specified condition. The method according to an embodiment may include an operation of inverting a phase of the first channel audio data and outputting second mixed audio data obtained by mixing the phase-inverted first channel audio data and the second channel audio data, through the audio output module or transmitting the second mixed audio data to an external audio output device through the communication module when the third value satisfies a second specified condition.

According to an embodiment of the disclosure, in a non-volatile storage medium storing instructions, the instructions are configured to, when executed by an electronic device, cause the electronic device to perform at least one operation, and the at least one operation may include an operation of obtaining the audio data including first channel audio data and second channel audio data based on an audio output event, an operation of calculating a first value corresponding to the first channel audio data and a second value corresponding to the second channel audio data when an output channel for outputting the audio data is a mono channel, an operation of calculating a third value corresponding to first mixed audio data obtained by mixing the first channel audio data and the second channel audio data when the first value or the second value is greater than or equal to a first specified value, an operation of outputting the first mixed audio data through an audio output module or transmitting the first mixed audio data to an external audio output device through a communication module when the third value satisfies a first specified condition, and an operation of inverting a phase of the first channel audio data and outputting second mixed audio data obtained by mixing the phase-inverted first channel audio data and the second channel audio data, through the audio output module or transmitting the second mixed audio data to an external audio output device through the communication module when the third value satisfies a second specified condition.

### [Brief Description of Drawings]

FIG. 1 is a block diagram illustrating an electronic device in a network environment according to an embodiment.
FIG. 2 is a block diagram illustrating a configuration of an electronic device according to an embodiment.
FIG. 3A is a view illustrating an example in which an electronic device performs an audio data output operation through a first processor according to an embodiment.
FIG. 3B is a view illustrating an example in which an operation of a Bluetooth encoding module is performed through a second processor when an electronic device includes a first processor and a second processor according to an embodiment.
FIG. 3C is a view illustrating an example in which operations of an audio decoder module, an audio effect module, a mono mixing processing module, and a Bluetooth encoding module are performed through a second processor when an electronic device includes a first processor and a second processor according to an embodiment.
FIG. 4 is a flowchart illustrating an audio data output operation in an electronic device according to an embodiment.
FIG. 5 is a flowchart illustrating an operation of identifying whether an output channel for outputting audio data is a mono channel in an electronic device according to an embodiment.
FIG. 6 is a flowchart illustrating a mono mixing processing operation using a mono mixing processing module according to an embodiment.
FIG. 7 is a view illustrating first mixed audio data obtained by mixing L channel audio data and R channel audio data when the L channel audio data and the R channel audio data are data that are only opposite in phase to each other according to an embodiment.
FIG. 8 is a view illustrating a case of inverting a phase of R channel audio data and mixing when a third value of first mixed audio data obtained by mixing L channel audio data and R channel audio data is less than a second specified value according to an embodiment.

In connection to the description of the drawings, identical or similar reference numerals may be used for identical or similar components.

### [Mode for Carrying out the Invention]

The terms as used herein are provided merely to describe some embodiments thereof, but not to limit the scope of other embodiments of the present disclosure. It is to be understood that the singular forms "a," "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

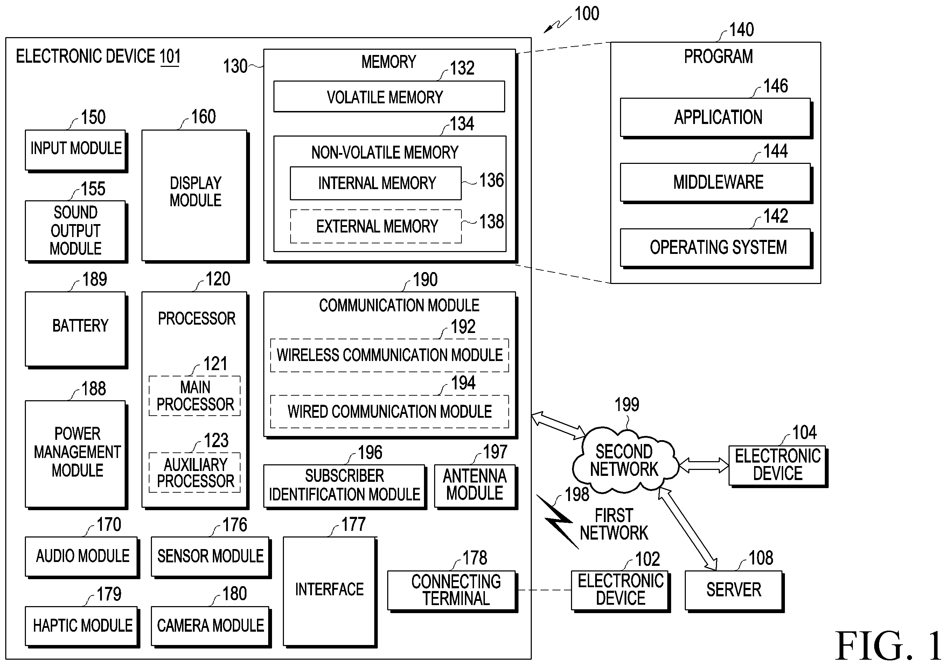

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, an audio output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the audio output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

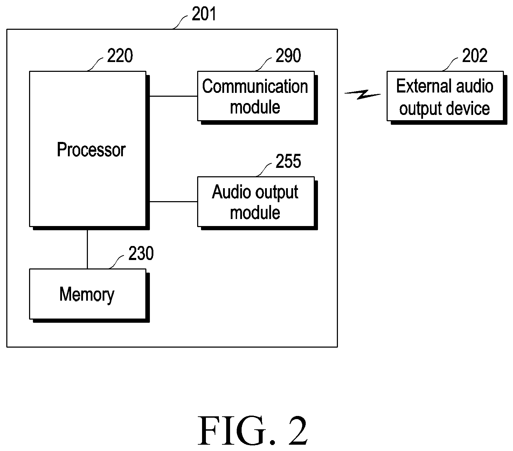

FIG. 2 is a block diagram illustrating an electronic device according to an embodiment.

Referring to FIG. 2, an electronic device 201 (e.g., the electronic device 101 of FIG. 1) according to an embodiment may include at least one processor (hereinafter also referred to as a processor) 220, memory 230, an audio output module 255, and/or a communication module 290. The electronic device 201 according to an embodiment is not limited thereto, and may further include various components or omit some of the components. The electronic device 201 according to an embodiment may further include the whole or part of the electronic device 101 illustrated in FIG. 1.

The processor 220 (e.g., the processor 120 of FIG. 1) according to an embodiment may include a first processor (e.g., a central processing unit (CPU)) or may include a first processor (e.g., a CPU) and a second processor (e.g., an audio processor or an audio subsystem). The processor 220 according to an embodiment may include an application processor (AP) including a first processor and a second processor, or the first processor may correspond to an AP and the second processor may be included as an auxiliary processor of the AP. The second processor according to an embodiment may be a processor having lower power consumption than the first processor.

The processor 220 according to an embodiment may obtain audio data (e.g., pulse code modulation (PCM) data) including first channel (e.g., R (right) channel or L (left) channel) audio data and second channel (e.g., L channel or R channel) audio data based on an audio output event. The processor 220 according to an embodiment may obtain an audio file to be output based on an audio output event requesting playback of an audio file (e.g., an mp3 file, a wav file, a wma file, or an aac file) stored in the memory 230 or streamed in real-time through the communication module 290. For example, the processor 220 may identify occurrence of an audio output event when there is a playback request for first content (media data including an audio file) through a content streaming service application, when there is a playback request for other second content (media data including an audio file) during video playback of the first content, when there is a request to play back third content (media data including an audio file) stored in the memory 230, or when there is a request to play back other fourth content (media data including an audio file) stored in the memory 230 during playback of the third content stored in the memory 230.

The processor 220 according to an embodiment may decode (or convert) the audio file to be output to obtain audio data (PCM data). The processor 220 according to an embodiment may apply a sound effect based on a specified (or preset) sound effect (e.g., echo, delay, chorus, or pitch shift) to the PCM data obtained after decoding, and may obtain PCM data to which the sound effect has been applied.

The processor 220 according to an embodiment may identify whether an output channel for outputting audio data is a mono channel. The processor 220 according to an embodiment may identify whether an output channel of the audio output module 255 (e.g., a speaker included in the electronic device 201) is a mono channel when set to output audio data to the audio output module 255. The processor 220 according to an embodiment may identify whether the output channel of the audio output module 255 is a mono channel using speaker channel information (e.g., the number of channels) of the electronic device 201 stored in the memory 230. The processor 220 according to an embodiment may identify whether an output channel of the external audio output device 202 is a mono channel when set to output audio data to the external audio output device 202 (e.g., an external audio output device connected by wired or wireless communication) (e.g., a wired earphone, a wireless earphone, a wireless headset, a wired headset, an external speaker connected wiredly, or a wireless speaker). The processor 220 according to an embodiment may identify whether the output channel of the external audio output device 202 is a mono channel using speaker channel information (e.g., the number of channels) received from the external audio output device 202 through communication.

The processor 220 according to an embodiment may control the first channel audio data and the second channel audio data to be output through the audio output module 255 or may control the first channel audio data and the second channel audio data to be transmitted to the external audio output device 202 through the communication module 290, based on the output channel for outputting audio data not being a mono channel (e.g., including two channels). The processor 220 according to an embodiment may provide a control signal to the audio output module 255 or the external audio output device 202 causing each of two channels to output the first channel audio data and the second channel audio data, respectively.

The processor 220 according to an embodiment may perform a mono mixing processing operation (or activate a mono mixing processing module (e.g., a mono mix checker)) based on the output channel for outputting audio data being a mono channel. When the processor 220 according to an embodiment performs the mono mixing processing operation (e.g., when performing the mono mixing processing operation by activating the mono mixing processing module (e.g., the mono mix checker)), the processor 220 may identify a first value corresponding to the first channel audio data (or a magnitude of a signal corresponding to the first channel audio data or an absolute value or magnitude of an amplitude of a signal corresponding to the first channel audio data) and a second value corresponding to the second channel audio data (or a magnitude of a signal corresponding to the second channel audio data or an absolute value or magnitude of an amplitude of a signal corresponding to the second channel audio data).

The processor 220 according to an embodiment may identify a third value corresponding to first mixed audio data obtained by mixing the first channel audio data and the second channel audio data (or a magnitude of a signal corresponding to the first mixed audio data or an absolute value or magnitude of an amplitude of a signal corresponding to the first mixed audio data), based on the first value or the second value being greater than or equal to (or exceeding) a first specified value (e.g., a first threshold).

The processor 220 according to an embodiment may provide (or deliver) the first channel audio data and the second channel audio data or the first mixed audio data to the audio output module 255 or to the external audio output device 202 through the communication module 290 when the third value satisfies a first specified condition (e.g., when the third value is greater than or equal to (or exceeds) a second specified value (e.g., a second threshold)). For example, when a mixing operation is performed in the audio output module 255 or the external audio output device 202, the processor 220 may provide the first channel audio data and the second channel audio data to the audio output module 255 or the external audio output device 202 and may cause the audio output module 255 or the external audio output device 202 to mix the first channel audio data and the second channel audio data and output the mixed first mixed audio data. For example, when the processor 220 performs the mixing operation, the processor 220 may provide the first mixed audio data to the communication module 290 or the external audio output device 202 to be output.

The processor 220 according to an embodiment may invert a phase of the first channel audio data and obtain (or store) phase-inverted first channel audio data when the third value satisfies a second specified condition (e.g., when the third value is less than (or equal to or less than) the second specified value). The processor 220 according to an embodiment may control the phase-inverted first audio data and the second audio data or second mixed audio data obtained by mixing the phase-inverted first audio data and the second audio data to be delivered to the audio output module 255 or to be transmitted to the external audio output device 202 through the communication module 290. For example, when a mixing operation is performed in the audio output module 255 or the external audio output device 202, the processor 220 may provide the phase-inverted first channel audio data and the second channel audio data to the audio output module 255 or the external audio output device 202 and may cause the audio output module 255 or the external audio output device 202 to mix the phase-inverted first channel audio data and the second channel audio data and output the mixed second mixed audio data. For example, when the processor 220 performs the mixing operation, the processor 220 may provide the second mixed audio data to the communication module 290 or the external audio output device 202 to be output.

The first specified value according to an embodiment may be a specified value (or a first threshold) serving as a reference for identifying whether the first channel audio data and the second channel audio data are silent or not. The second specified value according to an embodiment may be a specified value (or a second threshold) serving as a reference for identifying whether the first mixed audio data is silent or not.

When the processor 220 according to an embodiment provides the phase-inverted first channel audio data and the second channel audio data or the second mixed audio data to the audio output module 255 or the external audio output device 202, the processor 220 may further deliver a control signal (e.g., a control signal to reduce a volume of the second mixed audio data by half) to reduce the volume of the second mixed audio data to the audio output module 255 or the external audio output device 202.

The processor 220 according to an embodiment may identify (or calculate) a root mean square (RMS) value corresponding to the first channel audio data as the first value corresponding to the first channel audio data, may identify (or calculate) an RMS value corresponding to the second channel audio data as the second value corresponding to the second channel audio data, and may identify (or calculate) an RMS value corresponding to the first mixed audio data as the third value corresponding to the first mixed audio data. The processor 220 according to an embodiment may identify (or calculate) a sum of square values of amplitudes corresponding to the first channel audio data as the first value corresponding to the first channel audio data, may identify (or calculate) a sum of square values of amplitudes corresponding to the second channel audio data as the second value corresponding to the second channel audio data, and may identify (or calculate) a sum of square values of amplitudes corresponding to the first mixed audio data as the third value corresponding to the first mixed audio data. The processor 220 according to an embodiment may identify (or calculate) a sum of absolute values of amplitudes corresponding to the first channel audio data as the first value corresponding to the first channel audio data, may identify (or calculate) a sum of absolute values of amplitudes corresponding to the second channel audio data as the second value corresponding to the second channel audio data, and may identify (or calculate) a sum of absolute values of amplitudes corresponding to the first mixed audio data as the third value corresponding to the first mixed audio data.

In the description of the embodiment, an example has been described in which magnitudes of signals corresponding to the first channel audio data, the second channel audio data, and the first mixed audio data are compared using RMS values, sums of square values of amplitudes, and sums of absolute values of amplitudes, but other values capable of quantifying magnitudes of signals corresponding to the first channel audio data, the second channel audio data, and the first mixed audio data may also be used.

According to an embodiment, when the processor 220 delivers one of the phase-inverted first channel audio data and the second audio data to the audio output module 255 or the external audio output device 201, audio data of only one channel among the two-channel audio data may be reflected, but the processor 220 according to an embodiment of the disclosure delivers the phase-inverted first channel audio data and the second channel audio data together or delivers second mixed audio data obtained by mixing the phase-inverted first channel audio data and the second channel audio data to the audio output module 255 or the external audio output device 202, and by controlling the audio output module 255 or the external audio output device 202 to reduce the volume of the second mixed audio data and output the second mixed audio data, the processor 220 may cause audio data that is not silent while reflecting both the two-channel audio data to be output from the audio output module 255 or the external audio output device 202.

The memory 230 (e.g., the memory 130 of FIG. 1) according to an embodiment may store audio data. The memory 230 according to an embodiment may store a program (e.g., the program 140 of FIG. 1) used for a playback (or output) operation of audio data, as well as various data generated during execution of the program 140. The memory 230 according to an embodiment may temporarily or non-temporarily store an audio file or an audio file streamed in real-time from a network through the communication module 290, and may store audio data obtained by decoding (or converting) the audio file and storing a specified sound effect. The memory 230 according to an embodiment may store instructions (or instructions) causing the processor 220 to perform the audio data output operation of the disclosure.

The audio output module 255 (e.g., the audio output module 155 of FIG. 1) according to an embodiment may convert audio data into an analog audio signal and output the analog audio signal. For example, the audio output module 255 may include an amplifier and a speaker.

The communication module 290 (e.g., the communication module 190 of FIG. 1) according to an embodiment may include a wired communication module (e.g., a USB communication module) and/or a wireless communication module (e.g., a cellular module, a wireless-fidelity (Wi-Fi) module, a Bluetooth module, or a near field communication (NFC) module). The communication module 290 according to an embodiment may communicate with the external audio output device 202 (e.g., the electronic device 102 of FIG. 1 or the electronic device 104 of FIG. 1). The communication module 290 according to an embodiment may transmit the first channel audio data and the second channel audio data to the external audio output device 202, transmit the first mixed audio data to the external audio output device 202, transmit the phase-inverted first channel audio data and the second channel audio data to the external audio output device 202, or transmit the second mixed audio data to the external audio output device 202, based on control of the processor 220.

According to an embodiment, the electronic device 201 is not limited to the configuration illustrated in FIG. 2 and may further include various components. According to an embodiment, the electronic device 201 may further include a display (not illustrated) (e.g., the display module 160 of FIG. 1). The display 160 according to an embodiment may display various information based on control of the processor 220. For example, the display 160 may display a screen associated with output of audio data. According to an embodiment, the display 160 may be implemented in the form of a touch screen. The display 160, when implemented together with an input module in the form of a touchscreen display, may display various information generated according to the user's touch. According to an embodiment, the electronic device 201 may further include a microphone (not shown). The at least one processor 220 may process a sound received from the microphone into digital data and store the digital data in the memory 230 as audio data (or an audio file).

In an embodiment, major components of the electronic device 201 have been described above in connection with FIG. 2. According to an embodiment, however, all of the components of FIG. 2 are not essential components, and the electronic device 201 may be implemented with more or less components than those shown. Further, the connection relationship of the main components of the electronic device 201 described above through FIG. 2 may be changed according to various embodiments.

An electronic device (e.g., the electronic device 101 of FIG. 1 or the electronic device 201 of FIG. 2) according to an embodiment may include an audio output module (e.g., the audio output module 155 of FIG. 1 or the audio output module 255 of FIG. 2), a communication module (e.g., the communication module 190 of FIG. 1 or the communication module 290 of FIG. 2), memory (e.g., the memory 130 of FIG. 1 or the memory 230 of FIG. 2), and at least one processor (the processor 120 of FIG. 1 or the processor 220 of FIG. 2). The memory according to an embodiment may store instructions configured to, when executed by the at least one processor, cause the electronic device to obtain audio data including first channel audio data and second channel audio data based on an audio output event. The memory according to an embodiment may store instructions configured to cause the electronic device to identify a first value corresponding to the first channel audio data and a second value corresponding to the second channel audio data based on an output channel for outputting the audio data being a mono channel. The memory according to an embodiment may store instructions configured to cause the electronic device to identify a third value corresponding to first mixed audio data obtained by mixing the first channel audio data and the second channel audio data based on the first value or the second value being greater than or equal to (or exceeding) a first specified value. The memory according to an embodiment may store instructions configured to cause the electronic device to deliver the first channel audio data and the second channel audio data or the first mixed audio data to the audio output module or transmit the first channel audio data and the second channel audio data or the first mixed audio data to an external audio output device through the communication module when the third value satisfies a first specified condition. The memory according to an embodiment may store instructions configured to cause the electronic device to invert a phase of the first channel audio data to obtain phase-inverted first channel audio data and deliver the phase-inverted first audio data and the second audio data or second mixed audio data obtained by mixing the phase-inverted first audio data and the second audio data to the audio output module or transmit the phase-inverted first audio data and the second audio data or the second mixed audio data to an external audio output device through the communication module when the third value satisfies a second specified condition.

The memory according to an embodiment may store instructions configured to cause the electronic device to identify whether the output channel for outputting the audio data is the mono channel using channel information of the audio output module stored in the memory when the audio data is set to be output through the audio output module. The memory according to an embodiment may store instructions configured to cause the electronic device to identify whether the output channel for outputting the audio data is the mono channel using channel information received from the external audio output device through the communication module when the electronic device is set to output the audio data through the external audio output device.

The memory according to an embodiment may store instructions configured to cause the electronic device to provide a control signal to reduce a volume of the second mixed audio data to the audio output module or transmit the control signal to reduce the volume of the second mixed audio data to the external audio output device through the communication module.

The audio output module according to an embodiment may be configured to reduce the volume of the second mixed audio data based on the control signal and output an audio signal corresponding to the volume-decreased second mixed audio data.

According to an embodiment, the first value may be an RMS value corresponding to the first channel audio data, the second value may be an RMS value corresponding to the second channel audio data, and the third value may be an RMS value corresponding to the first mixed audio data.

According to an embodiment, the first value may be a sum of square values of amplitudes corresponding to the first channel audio data, the second value may be a sum of square values of amplitudes corresponding to the second channel audio data, and the third value may be a sum of square values of amplitudes corresponding to the first mixed audio data.

According to an embodiment, the first value may be a sum of absolute values of amplitudes corresponding to the first channel audio data, the second value may be a sum of absolute values of amplitudes corresponding to the second channel audio data, and the third value may be a sum of absolute values of amplitudes corresponding to the first mixed audio data.

According to an embodiment, the first channel may be an R channel and the second channel may be an L channel. According to an embodiment, the first channel may be an L channel and the second channel may be an R channel.

According to an embodiment, the audio data may include PCM data.

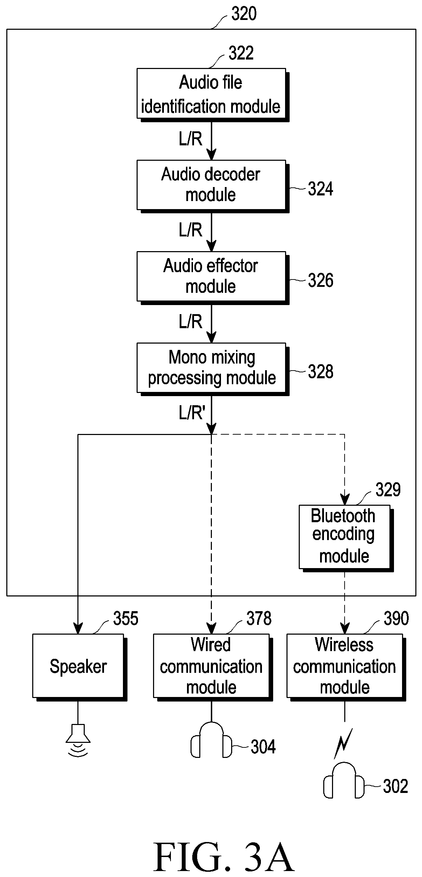

FIG. 3A is a view illustrating an example in which an electronic device performs an audio data output operation through a first processor according to an embodiment.

Referring to FIG. 3A, the processor 220 according to an embodiment may include a first processor 320 (e.g., a central processing unit (CPU) or an application processor (AP)). The first processor 320 according to an embodiment may include an audio file identification module 322, an audio decoder module 324, an audio effector module 326, a mono mixing processing module 328, and a Bluetooth encoding module 329. The audio file identification module 322, the audio decoder module 324, the audio effector module 326, the mono mixing processing module 328, and the Bluetooth encoding module 329 according to an embodiment may refer to a software module (or a program or a function).

The audio file identification module 322 according to an embodiment may identify (or obtain) an audio file to be output based on an audio output event requesting playback of an audio file (e.g., an mp3 file, a wav file, a wma file, or an aac file) stored in the memory 230 or streamed in real-time through the communication module 290.

The audio decoder module 324 according to an embodiment may decode (or convert) the audio file to obtain audio data (e.g., PCM data) including L channel audio data and R channel audio data.

The audio effector module 326 according to an embodiment may apply a specified (or preset) sound effect (e.g., echo, delay, chorus, or pitch shift) to the PCM data and output PCM data to which the sound effect has been applied.

The mono mixing processing module 328 according to an embodiment may identify whether an output channel for outputting the PCM data to which the sound effect has been applied is a mono channel. The mono mixing processing module 328 according to an embodiment may perform a mono mixing processing operation when set to output audio data to a mono channel speaker 355 (e.g., the audio output module 155 of FIG. 1 or the audio output module 255 of FIG. 2). When performing the mono mixing processing operation, the mono mixing processing module 328 according to an embodiment may identify a first value corresponding to the first channel audio data (or a magnitude of a signal corresponding to the first channel audio data or an absolute value or magnitude of an amplitude of a signal corresponding to the first channel audio data) and a second value corresponding to the second channel audio data (or a magnitude of a signal corresponding to the second channel audio data or an absolute value or magnitude of an amplitude of a signal corresponding to the second channel audio data), may identify a third value corresponding to first mixed audio data obtained by mixing the first channel audio data and the second channel audio data (or a magnitude of a signal corresponding to the first mixed audio data or an absolute value or magnitude of an amplitude of a signal corresponding to the first mixed audio data) based on the first value or the second value being greater than or equal to (or exceeding) a first specified value (e.g., a first threshold), and may obtain the first mixed audio data when the third value satisfies a first specified condition (e.g., when the third value is greater than or equal to (or exceeds) a second specified value (e.g., a second threshold)) or may invert a phase of the first channel audio data and obtain second mixed audio data obtained by mixing the phase-inverted first channel audio data and the second audio data when the third value satisfies a second specified condition (e.g., when the third value is less than (or equal to or less than) the second specified value). The mono mixing processing module 328 according to an embodiment may control the first mixed audio data or the second mixed audio data to be output through the speaker 355 after the mono mixing processing operation. When controlling the second mixed audio data to be output through the speaker 355, the mono mixing processing module 328 according to an embodiment may deliver a control signal to reduce a volume of the second mixed audio data to the speaker 355. The mono mixing processing module 328 according to an embodiment may identify (or calculate) an RMS value, a sum of square values of amplitudes, or a sum of absolute values of amplitudes corresponding to the first channel audio data as the first value corresponding to the first channel audio data, may identify (or calculate) an RMS value, a sum of square values of amplitudes, or a sum of absolute values of amplitudes corresponding to the second channel audio data as the second value corresponding to the second channel audio data, and may identify (or calculate) an RMS value, a sum of square values of amplitudes, or a sum of absolute values of amplitudes corresponding to the first mixed audio data as the third value corresponding to the first mixed audio data. .

When set to output audio data through a wired headset 304 or a wireless headset 302 including two channels, the mono mixing processing module 328 according to an embodiment may not perform the mono mixing processing operation, and may bypass the first channel audio data and the second channel audio data to a wired communication module 378 or a wireless communication module 390 so that the first channel audio data and the second channel audio data are transmitted to the wired headset 304 or the wireless headset 302 through the wired communication module 378 or the wireless communication module 390.

When the wireless communication module 390 is a Bluetooth communication module, the Bluetooth encoding module 329 according to an embodiment may encode the first channel audio data and the second channel audio data into a Bluetooth data format and provide the encoded Bluetooth data to the Bluetooth communication module.

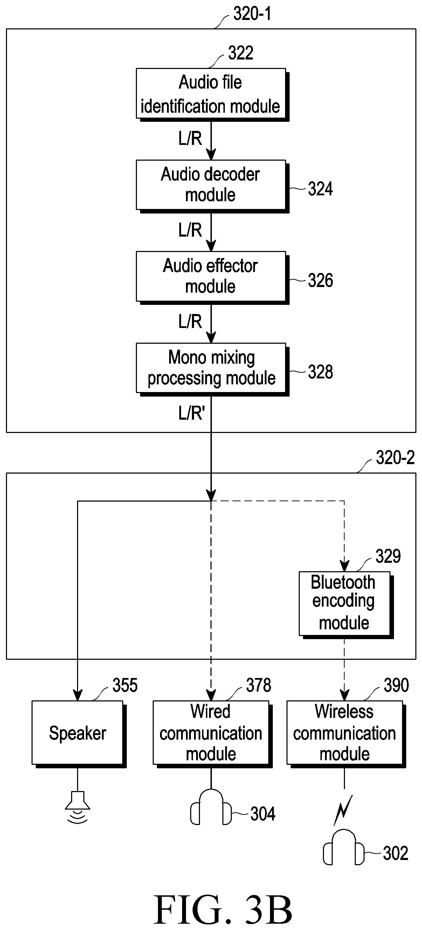

FIG. 3B is a view illustrating an example in which an operation of a Bluetooth encoding module is performed through a second processor when an electronic device includes a first processor and a second processor according to an embodiment.

Referring to FIG. 3B, the processor 220 according to an embodiment may include a first processor 320-1 (e.g., a central processing unit (CPU) or an application processor (AP)) and a second processor 320-2 (e.g., an audio processor or an audio subsystem). The first processor 320-1 according to an embodiment may perform operations of the audio file obtaining module 322, the audio decoder module 324, the audio effector module 326, and the mono mixing processing module 328 among the modules of the first processor 320 of FIG. 3A, and the second processor 320-2 may perform an operation of the Bluetooth encoding module 329 among the components of the first processor 320 of FIG. 3A.

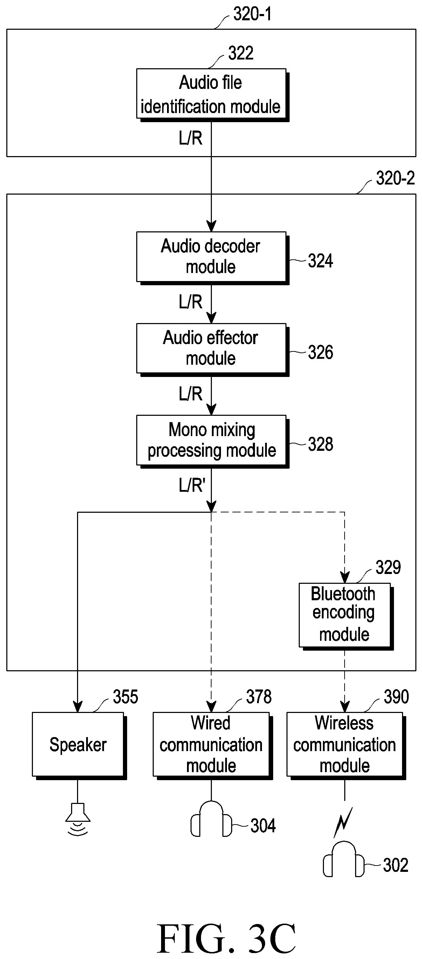

FIG. 3C is a view illustrating an example in which operations of an audio decoder module, an audio effector module, a mono mixing processing module, and a Bluetooth encoding module are performed through a second processor when an electronic device includes a first processor and a second processor according to an embodiment.

Referring to FIG. 3C, the processor 220 according to an embodiment may include a first processor 320-1 (e.g., a central processing unit (CPU) or an application processor (AP)) and a second processor 320-2 (e.g., an audio processor or an audio subsystem). The first processor 320-1 according to an embodiment may perform an operation of the audio file identification module 322 among the modules of the first processor 320 of FIG. 3A, and the second processor 320-2 may perform operations of the audio decoder module 324, the audio effector module 326, the mono mixing processing module 328, and the Bluetooth encoding module 329 among the operations of the first processor 320 of FIG. 3A.

In the embodiment of FIGS. 3A to 3C, an example of performing the audio data output operation using one or two processors has been described, but the number of physical processors may not be limited thereto.

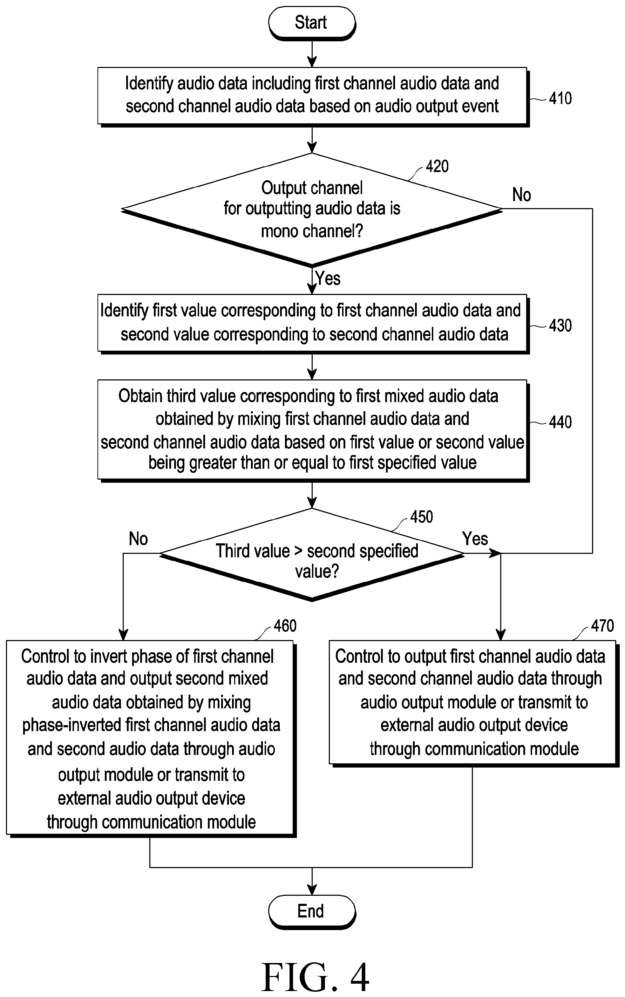

FIG. 4 is a flowchart illustrating an audio data output operation in an electronic device according to an embodiment.

Referring to FIG. 4, a processor (e.g., the processor 120 of FIG. 1, the processor 220 of FIG. 2, or the processor 320 of FIG. 3A, hereinafter described using the processor 220 of FIG. 2 as an example) of an electronic device (e.g., the electronic device 101 of FIG. 1 or the electronic device 201 of FIG. 2) according to an embodiment may perform at least one of operations 410 to 470.

In operation 410, the processor 220 according to an embodiment may identify (or obtain) audio data (e.g., PCM data) including first channel audio data and second channel audio data based on an audio output event. The processor 220 according to an embodiment may identify (or obtain) an audio file to be output based on an audio output event requesting playback of an audio file (e.g., an mp3 file, a wav file, a wma file, or an aac file) stored in the memory 230 or streamed in real-time through the communication module 290. The processor 220 according to an embodiment may decode (or convert) the audio file to be output to obtain audio data (PCM data), may apply a sound effect to the PCM data based on a specified (or preset) sound effect (e.g., echo, delay, chorus, or pitch shift), and may obtain PCM data to which the sound effect has been applied.

In operation 420, the processor 220 according to an embodiment may identify whether an output channel for outputting audio data is a mono channel. The processor 220 according to an embodiment may identify whether an output channel of the audio output module 255 (e.g., a speaker included in the electronic device 201) is a mono channel when set to output audio data to the audio output module 255. The processor 220 according to an embodiment may identify whether an output channel of the external audio output device 202 is a mono channel when set to output audio data to the external audio output device 202 (e.g., an external audio output device connected by wired or wireless communication) (e.g., a wired earphone, a wireless earphone, a wireless headset, a wired headset, an external speaker connected wiredly, or a wireless speaker).

In operation 430, the processor 220 according to an embodiment may identify a first value corresponding to the first channel audio data and a second value corresponding to the second channel audio data based on the output channel for outputting audio data being a mono channel. The processor 220 according to an embodiment may identify (or calculate) an RMS value corresponding to the first channel audio data as the first value corresponding to the first channel audio data and may identify (or calculate) an RMS value corresponding to the second channel audio data as the second value corresponding to the second channel audio data. The processor 220 according to an embodiment may identify (or calculate) a sum of square values or a sum of absolute values of amplitudes corresponding to the first channel audio data as the first value corresponding to the first channel audio data and may identify (or calculate) a sum of square values or a sum of absolute values of amplitudes corresponding to the second channel audio data as the second value corresponding to the second channel audio data.

In operation 440, the processor 220 according to an embodiment may obtain a third value corresponding to first mixed audio data obtained by mixing the first channel audio data and the second channel audio data based on the first value or the second value being greater than or equal to (or exceeding) a first specified value (e.g., a first threshold). The first specified value according to an embodiment may be a specified value (or a threshold) serving as a reference for identifying whether the first channel audio data and the second channel audio data are silent or not. For example, when greater than or equal to the first specified value, the processor may determine that it is not silent and may obtain the third value corresponding to first mixed audio data obtained by mixing the first channel audio data and the second channel audio data.

When both the first value and the second value are less than or equal to the first specified value (e.g., the first threshold), the processor 220 according to an embodiment may identify the audio data as silent and, when any one of the first value and the second value is greater than or equal to (or exceeds) the first specified value (e.g., the first threshold), the processor 220 may identify the audio data as not silent. The processor 220 according to an embodiment may identify (or calculate) an RMS corresponding to the first mixed audio data as the third value corresponding to the first mixed audio data. The processor 220 according to an embodiment may identify (or calculate) a sum of square values or a sum of absolute values of amplitudes corresponding to the first mixed audio data as the third value corresponding to the first mixed audio data. In operation 450, the processor 220 according to an embodiment may identify whether the third value is greater than or equal to (or exceeds) a second specified value (e.g., a second threshold). The second specified value according to an embodiment may be a specified value (or a threshold) serving as a reference for identifying whether the first mixed audio data is silent or not. When the third value is less than or equal to (or less than) the second specified value (e.g., the second threshold), the processor 220 according to an embodiment may identify the first mixed audio data as silent and, when the third value is greater than or equal to (or exceeds) the second specified value (e.g., the second threshold), the processor 220 may identify the first mixed audio data as not silent (e.g., a state in which the first channel audio data and the second channel audio data have canceled each other out due to mixing).

In operation 460, when the third value is not greater than or equal to (or exceeding) the second specified value while the first value or the second value is greater than or equal to (or exceeding) the first specified value, the processor 220 according to an embodiment may invert a phase of the first channel audio data, obtain second mixed audio data obtained by mixing the phase-inverted first channel audio data and the second audio data, and control the second mixed audio data to be output through the audio output module 255 or to be transmitted to the external audio output device 202 through the communication module 290. When controlling the second mixed audio data to be output through the audio output module 255 or to be transmitted to the external audio output device 202 through the communication module 290, the processor 220 according to an embodiment may deliver a control signal to reduce a volume of the second mixed audio data to the audio output module 255 or transmit the control signal to the external audio output device 202 through the communication module 290. When the mixing operation is performed in the audio output module 255 or the external audio output device 202, the processor 220 according to an embodiment may provide the phase-inverted first channel audio data and the second channel audio data to the audio output module 255 or the external audio output device 202 and may cause the audio output module 255 or the external audio output device 202 to mix the phase-inverted first channel audio data and the second channel audio data and output the mixed second mixed audio data.

In operation 470, when the output channel for outputting audio data is not a mono channel or when the third value is greater than or equal to (or exceeds) the second specified value while the first value or the second value is greater than or equal to (or exceeding) the first specified value, the processor 220 according to an embodiment may control the first channel audio data and the second audio data to be output through the audio output module 255 or to be transmitted to the external audio output device 202 through the communication module 290. When the mixing operation is performed in the audio output module 255 or the external audio output device 202, the processor 220 according to an embodiment may provide the first channel audio data and the second channel audio data to the audio output module 255 or the external audio output device 202 and may cause the audio output module 255 or the external audio output device 202 to mix the first channel audio data and the second channel audio data and output the mixed first mixed audio data.

A method of outputting audio data in an electronic device (the electronic device 101 of FIG. 1 or the electronic device 201 of FIG. 2) according to an embodiment may include an operation of obtaining the audio data including first channel audio data and second channel audio data based on an audio output event. The method according to an embodiment may include an operation of calculating a first value corresponding to the first channel audio data and a second value corresponding to the second channel audio data when an output channel for outputting the audio data is a mono channel. The method according to an embodiment may include an operation of calculating a third value corresponding to first mixed audio data obtained by mixing the first channel audio data and the second channel audio data when the first value or the second value is greater than or equal to (or exceeds) a first specified value. The method according to an embodiment may include an operation of outputting the first mixed audio data through the audio output module 155, 255 or transmitting the first mixed audio data to an external audio output device through the communication module 190, 290 when the third value satisfies a first specified condition. The method according to an embodiment may include an operation of inverting a phase of the first channel audio data and outputting second mixed audio data obtained by mixing the phase-inverted first channel audio data and the second channel audio data, through the audio output module or transmitting the second mixed audio data to an external audio output device through the communication module when the third value satisfies a second specified condition.

The method according to an embodiment may include an operation of identifying whether the output channel for outputting the audio data is the mono channel using channel information of the audio output module stored in the memory when the electronic device is set to output the audio data through the audio output module. The method according to an embodiment may include an operation of identifying whether the output channel for outputting the audio data is the mono channel using channel information received from the external audio output device through the communication module when the electronic device is set to output the audio data through the external audio output device.

The method according to an embodiment may include an operation of providing a control signal to reduce a volume of the second mixed audio data to the audio output module or an operation of transmitting the control signal to reduce the volume of the second mixed audio data to the external audio output device through the communication module.

The method according to an embodiment may include an operation of reducing, by the audio output module, the volume of the second mixed audio data based on the control signal and outputting an audio signal corresponding to the volume-decreased second mixed audio data.

In the method according to an embodiment, the first value may be an RMS value corresponding to the first channel audio data, the second value may be an RMS value corresponding to the second channel audio data, and the third value may be an RMS value corresponding to the first mixed audio data.

In the method according to an embodiment, the first value may be a sum of square values of amplitudes corresponding to the first channel audio data, the second value may be a sum of square values of amplitudes corresponding to the second channel audio data, and the third value may be a sum of square values of amplitudes corresponding to the first mixed audio data.

In the method according to an embodiment, the first value may be a sum of absolute values of amplitudes corresponding to the first channel audio data, the second value may be a sum of absolute values of amplitudes corresponding to the second channel audio data, and the third value may be a sum of absolute values of amplitudes corresponding to the first mixed audio data.

In the method according to an embodiment, the first channel may be an R channel and the second channel may be an L channel, or the first channel may be an L channel and the second channel may be an R channel.

In the method according to an embodiment, the audio data may include PCM data.

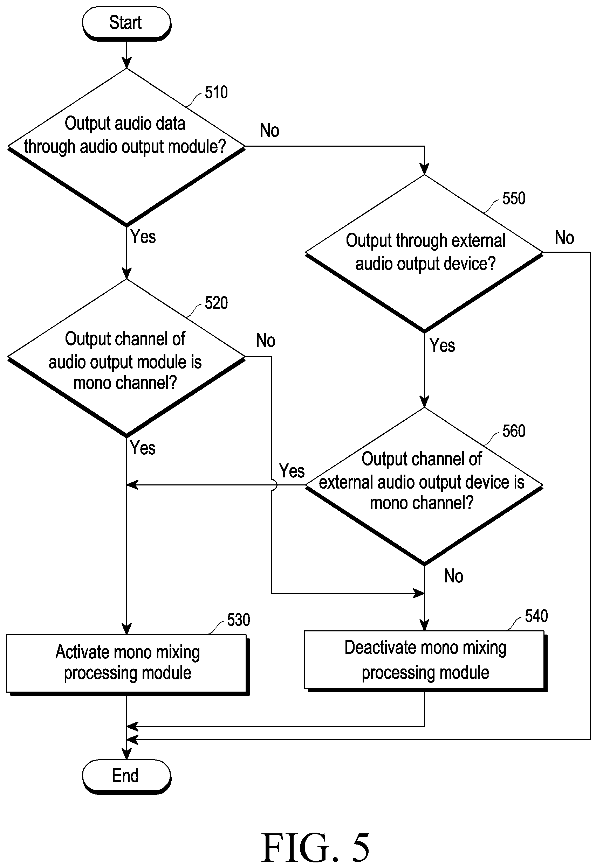

FIG. 5 is a flowchart illustrating an operation of identifying whether an output channel for outputting audio data is a mono channel in an electronic device according to an embodiment.

Referring to FIG. 5, a processor (e.g., the processor 120 of FIG. 1, the processor 220 of FIG. 2, or the processor 320 of FIG. 3A, hereinafter described using the processor 220 of FIG. 2 as an example) of an electronic device (e.g., the electronic device 101 of FIG. 1 or the electronic device 201 of FIG. 2) according to an embodiment may perform at least one of operations 510 to 560.

In operation 510, the processor 220 according to an embodiment may identify whether it is set to output audio data to the audio output module 255 (e.g., a speaker included in the electronic device 201).

In operation 520, when it is set to output audio data to the audio output module 255, the processor 220 according to an embodiment may identify whether an output channel of the audio output module 255 is a mono channel.

In operation 530, when it is set to output audio data to the audio output module 255 and the output channel of the audio output module 255 is a mono channel, the processor 220 according to an embodiment may activate the mono mixing processing module 328. The processor 220 according to an embodiment may perform a mono mixing processing operation (e.g., at least a portion of operations 430 to 470 of FIG. 4) based on activation of the mono mixing processing module 328.

In operation 540, when it is set to output audio data to the audio output module 255 and the output channel of the audio output module 255 is not a mono channel, the processor 220 according to an embodiment may deactivate the mono mixing processing module 328. The processor 220 according to an embodiment may not perform mono mixing processing based on deactivation of the mono mixing processing module 328 (e.g., perform operation 470 of FIG. 4).

In operation 550, the processor 220 according to an embodiment may identify whether it is set to output audio data through the external audio output device 202. When it is not set to output audio data through the external audio output device 202, the processor 220 according to an embodiment may terminate.

In operation 560, when it is set to output audio data through the external audio output device 202, the processor 220 according to an embodiment may identify whether an output channel of the external audio output device 202 is a mono channel. When it is set to output audio data through the external audio output device 202 and the output channel of the external audio output device 202 is a mono channel, the processor 220 according to an embodiment may perform operation 530. When it is set to output audio data through the external audio output device 202 and the output channel of the external audio output device 202 is not a mono channel, the processor 220 according to an embodiment may perform operation 540.

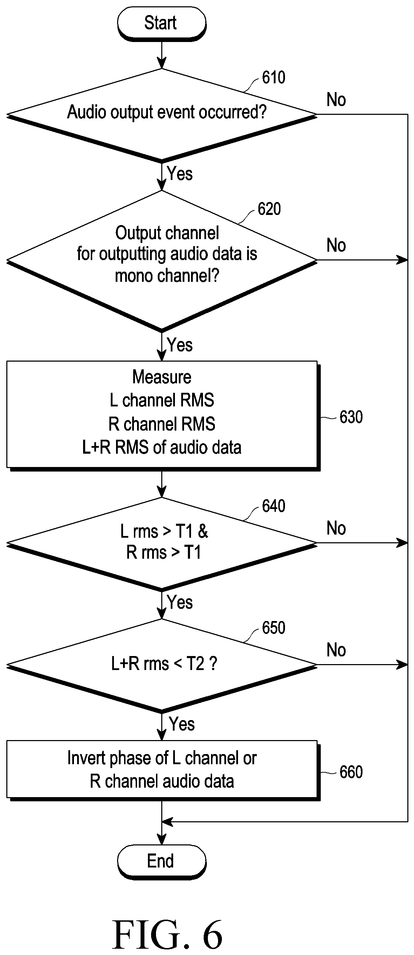

FIG. 6 is a flowchart illustrating a mono mixing processing operation using a mono mixing processing module according to an embodiment.

Referring to FIG. 6, a processor (e.g., the processor 120 of FIG. 1, the processor 220 of FIG. 2, or the processor 320 of FIG. 3A, hereinafter described using the processor 220 of FIG. 2 as an example) of an electronic device (e.g., the electronic device 101 of FIG. 1 or the electronic device 201 of FIG. 2) according to an embodiment may perform at least one of operations 610 to 660 using the mono mixing processing module 328.

In operation 610, the processor 220 according to an embodiment may identify occurrence of an audio output event. The processor 220 according to an embodiment may identify occurrence of an audio output event requesting playback of an audio file (e.g., an mp3 file, a wav file, a wma file, or an aac file) stored in the memory 230 or streamed in real-time through the communication module 290.

In operation 620, the processor 220 according to an embodiment may identify whether an output channel for outputting audio data is a mono channel. The processor 220 according to an embodiment may identify whether an output channel of the audio output module 255 (e.g., a speaker included in the electronic device 201) is a mono channel when set to output audio data to the audio output module 255. The processor 220 according to an embodiment may identify whether an output channel of the external audio output device 202 is a mono channel when set to output audio data to the external audio output device 202 (e.g., an external audio output device connected by wired or wireless communication) (e.g., a wired earphone, a wireless earphone, a wireless headset, a wired headset, an external speaker connected wiredly, or a wireless speaker).

In operation 630, the processor 220 according to an embodiment may measure an RMS value of L channel audio data (L channel RMS), an RMS value of R channel audio data (R channel RMS), and an RMS value of first mixed audio data obtained by mixing L channel audio data and R channel audio data (L+R RMS) of a first frame among audio data, based on an output channel for outputting audio data being a mono channel. When an output channel for outputting audio data is not a mono channel, the processor 220 according to an embodiment may terminate the operation.

In operation 640, the processor 220 according to an embodiment may identify (or determine) whether the L channel RMS value exceeds a first specified value (T1) and the R channel RMS value exceeds the first specified value (T1). When it is not the case that the L channel RMS value exceeds the first specified value (T1) and the R channel RMS value exceeds the first specified value (T1), the processor 220 according to an embodiment may terminate. When the L channel RMS value exceeds the first specified value (T1) and the R channel RMS value exceeds the first specified value (T1), the processor 220 according to an embodiment may proceed to operation 650. The processor 220 according to an embodiment may perform operation 630 sequentially for frames of audio data until the L channel RMS value exceeds the first specified value (T1) and the R channel RMS value exceeds the first specified value (T1). For example, when audio data includes a plurality of frames, the processor 220 may sequentially determine for each of the plurality of frames whether it is not the case that the L channel RMS value exceeds the first specified value (T1) and the R channel RMS value exceeds the first specified value (T1) and, when a frame occurs where the R channel RMS value exceeds the first specified value (T1) and the R channel RMS value exceeds the first specified value (T1), the processor 220 may proceed to operation 650 for the corresponding frame.

In operation 650, the processor 220 according to an embodiment may identify whether an RMS value (L+R RMS) of first mixed audio data obtained by mixing L channel audio data and R channel audio data is less than (or equal to or less than) a second specified value (T2). When an RMS value (L+R RMS) of first mixed audio data obtained by mixing L channel audio data and R channel audio data is not less than (or equal to or less than) the second specified value (T2), the processor 220 according to an embodiment may terminate the operation.

In operation 660, when the RMS value (L+R RMS) of the first mixed audio data is less than (or equal to or less than) the second specified value (T2), the processor 220 according to an embodiment may invert (or reverse) a phase of L channel audio data or R channel audio data.

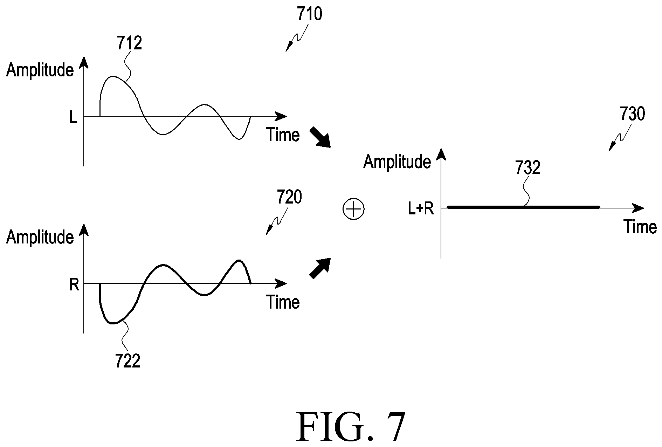

FIG. 7 is a view illustrating first mixed audio data obtained by mixing L channel audio data and R channel audio data when the L channel audio data and the R channel audio data are data that are only opposite in phase to each other according to an embodiment.

Referring to FIG. 7, reference numeral 710 according to an embodiment may be a graph illustrating an amplitude of L channel audio data 712 over time. Reference numeral 720 according to an embodiment may be a graph illustrating an amplitude of R channel audio data 722 over time. Reference numeral 730 according to an embodiment is a graph illustrating an amplitude of first mixed audio data 732 obtained by mixing L channel audio data 712 and R channel audio data 722 over time.

When L channel audio data 712 and R channel audio data 722 according to an embodiment are data that are only opposite in phase to each other, if the L channel audio data 712 and the R channel audio data 722 are mixed, a value of the L channel audio data 712 and a value of the R channel audio data 722 cancel each other out, and a value of the mixed first mixed audio data 732 may become substantially zero. When the value of the first mixed audio data 732 is zero, a silence phenomenon in which no sound is produced may occur from the audio output module (or the external audio output device) outputting the first mixed audio data 732.

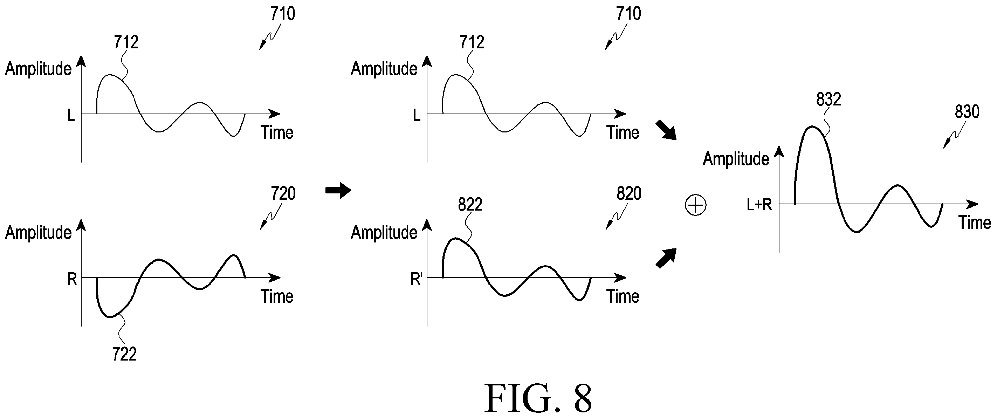

FIG. 8 is a view illustrating a case of inverting a phase of R channel audio data and mixing when a third value of first mixed audio data obtained by mixing L channel audio data and R channel audio data is less than (or equal to or less than) a second specified value according to an embodiment.

Referring to FIG. 8, when the third value of first mixed audio data 732 obtained by mixing L channel audio data 712 and R channel audio data 722 is less than (or equal to or less than) the second specified value, a processor (e.g., the processor 120 of FIG. 1, the processor 220 of FIG. 2, or the processor 320 of FIG. 3A, hereinafter described using the processor 220 of FIG. 2 as an example) of an electronic device (e.g., the electronic device 101 of FIG. 1 or the electronic device 201 of FIG. 2) according to an embodiment may invert a phase of one (e.g., R channel audio data 722) of the L channel audio data 712 and the R channel audio data 722. Reference numeral 820 according to an embodiment may be a graph illustrating an amplitude of R' channel audio data 822 obtained by inverting a phase of R channel audio data 722 over time.

The processor 220 according to an embodiment may mix L channel audio data 712 and phase-inverted R' channel audio data 822. Reference numeral 830 according to an embodiment may be a graph illustrating an amplitude of second mixed audio data 832 obtained by mixing L channel audio data 712 and phase-inverted R' channel audio data 822 over time.

When L channel audio data 712 and R channel audio data 722 according to an embodiment are data that are only opposite in phase to each other, if a phase of one channel audio data (e.g., R channel audio data 722) is inverted and mixed, a value of the mixed second mixed audio data 832 does not become zero, thereby preventing a silence phenomenon in which no sound is produced from the audio output module (or the external audio output device).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the present disclosure and the terms used therein are not intended to limit the technological features set forth herein to particular embodiments and include various changes, equivalents, or replacements for a corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a non-volatile storage medium storing instructions, the instructions are configured to, when executed by an electronic device, cause the electronic device to perform at least one operation, and the at least one operation may include an operation of obtaining the audio data including first channel audio data and second channel audio data based on an audio output event, an operation of identifying a first value corresponding to the first channel audio data and a second value corresponding to the second channel audio data based on an output channel for outputting the audio data being a mono channel, an operation of identifying a third value corresponding to first mixed audio data obtained by mixing the first channel audio data and the second channel audio data based on the first value or the second value being greater than or equal to a first specified value, an operation of outputting the first mixed audio data through an audio output module or transmitting the first mixed audio data to an external audio output device through a communication module when the third value satisfies a first specified condition, and an operation of inverting a phase of the first channel audio data and outputting second mixed audio data obtained by mixing the phase-inverted first channel audio data and the second audio data, through the audio output module or transmitting the second mixed audio data to an external audio output device through the communication module when the third value satisfies a second specified condition.

The embodiments shown and described in the specification and the drawings are provided merely for better understanding of the present invention, and the present invention should not be limited thereto or thereby. It should be appreciated by one of ordinary skill in the art that various changes in form or detail may be made to the embodiments without departing from the scope of the present disclosure defined by the following claims.

## Claims

1. An electronic device (101, 201) comprising:
an audio output module (155, 255);
communication module (190, 290);
memory (130, 230) storing instructions;
at least one processor (120, 220),
wherein the instructions, when executed by the at least one processor individually or collectively, cause the electronic device to:
obtain audio data including first channel audio data and second channel audio data based on an audio output event,
when an output channel for outputting the audio data is a mono channel, operate to calculate a first value corresponding to the first channel audio data and a second value corresponding to the second channel audio data,
when the first value or the second value is greater than or equal to a first specified value, operate to calculate a third value corresponding to first mixed audio data obtained by mixing the first channel audio data and the second channel audio data,
when the third value satisfies a first specified condition, output, through the audio output module, the first mixed audio data or transmit, through the communication module, the first mixed audio data to an external audio output device, and
when the third value satisfies a second specified condition, invert a phase of the first channel audio data and output, through the audio output module, second mixed audio data obtained by mixing the phase-inverted first channel audio data and the second channel audio data or transmit, through the communication module, the second mixed audio data to an external audio output device.

2. The electronic device of claim 1,
wherein the instructions, when executed by the at least one processor individually or collectively, cause the electronic device to:
when the audio data is set to be output through the audio output module, identify whether the output channel for outputting the audio data is the mono channel by using channel information of the audio output module stored in the memory, or
when the audio data is set to be output through the external audio output device, identify whether the output channel for outputting the audio data is the mono channel by using channel information received from the external audio output device through the communication module.

3. The electronic device of claim 1 or 2,
wherein the instructions, when executed by the at least one processor individually or collectively, cause the electronic device to:
provide a control signal to reduce a volume of the second mixed audio data to the audio output module or transmit, through the communication module, the control signal to reduce the volume of the second mixed audio data to the external audio output device.

4. The electronic device of any one of claims 1 to 3,
wherein the audio output module is configured to reduce the volume of the second mixed audio data based on the control signal and output an audio signal corresponding to the volumereduced second mixed audio data.

5. The electronic device of any one of claims 1 to 4,
wherein the first value is an RMS value corresponding to the first channel audio data,
the second value is an RMS value corresponding to the second channel audio data, and
the third value is an RMS value corresponding to the first mixed audio data.

6. The electronic device of any one of claims 1 to 5,
wherein the first value is a sum of square values of amplitudes corresponding to the first channel audio data,
the second value is a sum of square values of amplitudes corresponding to the second channel audio data, and
the third value is a sum of square values of amplitudes corresponding to the first mixed audio data.

7. The electronic device of any one of claims 1 to 6,
wherein the first value is a sum of absolute values of amplitudes corresponding to the first channel audio data,
the second value is a sum of absolute values of amplitudes corresponding to the second channel audio data, and
the third value is a sum of absolute values of amplitudes corresponding to the first mixed audio data.

8. The electronic device of any one of claims 1 to 7,
wherein at least one channel of the first channel or the second channel is a right channel or a left channel.

9. The electronic device of any one of claims 1 to 8,
wherein when the third value satisfies the first specified condition, the third value corresponding to the first mixed audio data is greater than or equal to a second specified value corresponding to silence, and
when the third value satisfies the second specified condition, the third value corresponding to the first mixed audio data is less than the second specified value corresponding to the silence.

10. The electronic device of any one of claims 1 to 9,
wherein the audio data includes PCM data.

11. A method of outputting audio data in an electronic device (101, 201), the method comprising:
obtaining the audio data including first channel audio data and second channel audio data based on an audio output event;
when an output channel for outputting the audio data is a mono channel, calculating a first value corresponding to the first channel audio data and a second value corresponding to the second channel audio data;
when the first value or the second value is greater than or equal to a first specified value, calculating a third value corresponding to first mixed audio data obtained by mixing the first channel audio data and the second channel audio data;
when the third value satisfies a first specified condition, outputting the first mixed audio data through an audio output module (155, 255) or transmitting the first mixed audio data to an external audio output device through a communication module (190, 290); and
when the third value satisfies a second specified condition, inverting a phase of the first channel audio data and outputting, through the audio output module, second mixed audio data obtained by mixing the phase-inverted first channel audio data and the second channel audio data or transmitting, through the communication module, the second mixed audio data to an external audio output device.

12. The method of claim 11, further comprising:
when the audio data is set to be output through the audio output module, identifying whether the output channel for outputting the audio data is the mono channel using channel information of the audio output module stored in memory of the electronic device, or
when the audio data is set to be output through the external audio output device, identifying whether the output channel for outputting the audio data is the mono channel using channel information received from the external audio output device through the communication module of the electronic device.

13. The method of claim 11 or 12, further comprising:
providing a control signal to reduce a volume of the second mixed audio data to the audio output module; or
transmitting, through the communication module, the control signal to reduce the volume of the second mixed audio data to the external audio output device.

14. The method of any one of claims 11 to 13, further comprising:
reducing, by the audio output module, the volume of the second mixed audio data based on the control signal and outputting an audio signal corresponding to the volume-decreased second mixed audio data.

15. A non-transitory storage medium storing instructions, wherein the instructions are configured to, when executed by an electronic device, cause the electronic device to perform at least one operation,
the at least one operation comprising:
obtaining the audio data including first channel audio data and second channel audio data based on an audio output event;
when an output channel for outputting the audio data is a mono channel, calculating a first value corresponding to the first channel audio data and a second value corresponding to the second channel audio data;
when the first value or the second value satisfies a first specified condition, calculating a third value corresponding to first mixed audio data obtained by mixing the first channel audio data and the second channel audio data;
when the third value satisfies a second specified condition, outputting the first mixed audio data through an audio output module (155, 255) or transmitting the first mixed audio data to an external audio output device through a communication module (190, 290); and
when the third value is less than the second specified value, inverting a phase of the first channel audio data and outputting, through the audio output module, second mixed audio data obtained by mixing the phase-inverted first channel audio data and the second channel audio data or transmitting, through the communication module, the second mixed audio data to an external audio output device.
